# EUROPÄISCHE PATENTSCHRIFT

(11) **EP 4 023 364 B1**
(45) Veröffentlichungstag und Bekanntmachung des Hinweises auf die Patenterteilung: **25.01.2023**
(21) Anmeldenummer: 21213790.5
(22) Anmeldetag: 10.12.2021
(51) Int. Cl.: B22F 3/00, B22F 3/10, B22F 10/18, B22F 10/47, B22F 10/62, B22F 12/30, B22F 12/86, B28B 1/00, B33Y 10/00, B33Y 30/00, B33Y 40/20, F27D 3/00

(54) **VORRICHTUNG UND VERFAHREN ZUR HERSTELLUNG METALLISCHER UND/ODER KERAMISCHER TEILE**
DEVICE AND METHOD FOR PRODUCING METALLIC AND/OR CERAMIC PARTS
DISPOSITIF ET PROCÉDÉ DE FABRICATION DE PIÈCES MÉTALLIQUES ET/OU CÉRAMIQUES

(30) Priorität: 05.01.2021 DE 102021100057
(43) Veröffentlichungstag der Anmeldung: 06.07.2022
(73) Patentinhaber: Xerion Berlin Laboratories GmbH, 12487 Berlin (DE)
(72) Erfinder: Lohse, Uwe, 10781 Berlin (DE)
(74) Vertreter: Müller, Wolfram Hubertus

(56) Entgegenhaltungen:
- EP-A1- 3 323 530
- WO-A1-2018/200512
- DE-A1- 4 403 935

## Beschreibung

Die Erfindung betrifft eine Vorrichtung zur Herstellung metallischer und/oder keramischer Teile gemäß dem Oberbegriff des Patentanspruchs 1.

Es sind als "Fused Deposition Modeling" (FDM) oder "Fused Filament Fabrication" (FFF) bezeichnete Fertigungsverfahren bekannt, bei denen in einer Druckereinheit ein Filament schichtweise zu einem metallischen oder keramischen Druckteil gefertigt wird. Das Filament umfasst dabei ein Metallpulver oder ein Keramikpulver und ist mit einem typischerweise organischen Binder vermischt.

Das Druckteil wird anschließend in an sich bekannter Weise in einem Ofen gesintert. In diesem Zusammenhang kann auch ein Entbinderungsschritt erfolgen, bei dem der Binder aus dem Druckteil gelöst wird. Dabei entsteht ein metallisches oder keramisches Teil, das bis zu 99,9 % der theoretischen Dichte des entsprechenden Materials aufweist. Zwischen Druckereinheit und Ofen besteht typischerweise das Erfordernis, das auf eine Unterlage bzw. Druckplatte gedruckte Teil (das Druckteil) von der Druckplatte zu lösen. Hierbei kann es zu einer unerwünschten Beschädigung oder Verformung des Druckteils kommen.

Die WO 2018/209029 A1 oder die WO 2018/200512 A1 offenbart eine gattungsgemäße Vorrichtung und ein Verfahren zum Entbindern eines 3D-Druckteils, wobei Material zusammen mit einem Bindemittel durch einen Druckkopf auf ein Druckbett zu einem Druckteil aufgetragen, dieses entbindert und anschließend gesintert wird. Dabei kann beim Sintervorgang das Druckteil in einer Überkopfposition angeordnet sein.

Der vorliegenden Erfindung liegt die Aufgabe zugrunde, eine Vorrichtung zur Herstellung metallischer und/oder keramischer Teile mittels additiver Verfahren bereitzustellen, die in effektiver Weise eine Herstellung eines metallischen und/oder keramischen Teils ermöglicht, ohne dass das Druckteil beim Herstellungsprozess beschädigt wird.

Diese Aufgabe wird durch eine Vorrichtung mit den Merkmalen des Patentanspruchs 1 und ein Verfahren mit den Merkmalen des Patentanspruchs 10 gelöst. Ausgestaltungen der Erfindung sind in den abhängigen Ansprüchen angegeben.

Demnach betrachtet die vorliegende Erfindung in einem ersten Erfindungsaspekt eine Vorrichtung zur Herstellung metallischer und/oder keramischer Teile. Die Vorrichtung weist eine Druckereinheit auf, in der mindestens ein Filament, das aus einem Metall- oder Keramikpulver vermischt mit einem Binder besteht, schichtweise zu einem metallischen und/oder keramischen Druckteil gefertigt wird, wobei das Druckteil auf eine Druckplatte gedruckt wird. Darüber hinaus weist die Vorrichtung einen Ofen auf, welcher dazu ausgebildet ist, das Druckteil auf einer Sinterplatte zu einem Fertigteil zu sintern. Dabei ist der Ofen dazu ausgebildet, die Druckplatte mit dem Druckteil in einer Überkopfposition, in der das Druckteil an der Unterseite der Druckplatte angeordnet ist, aufzunehmen, und die Druckplatte durch chemischen oder thermischen Eintrag aufzulösen.

Gemäß der vorliegenden Erfindung weist der Ofen eine Steuerung auf, die dazu vorgesehen ist, die im Ofen angeordnete Sinterplatte in ihrer vertikalen Position zu verstellen. Die Steuerung nimmt eine Steuerung derart vor, dass die Sinterplatte in eine obere Aufnahmeposition direkt unterhalb des Druckteils verfahren wird, bevor die Druckplatte aufgelöst wird, so dass das Druckteil bei Auflösen der Druckplatte auf der Sinterplatte abgelegt wird.

Die vorliegende Erfindung beruht danach auf dem Gedanken, eine schonende Ablösung des Druckteils von der Unterlage (der Druckplatte) zu erreichen, indem eine auflösbare Druckplatte, die im Ofen eine Auflösung erfährt, in Kombination mit einer Überkopfanordnung des Druckteils und der Druckplatte eingesetzt werden. Gleichzeitig wird durch die vertikal verfahrbare Sinterplatte sichergestellt, dass das Druckteil schonend und ohne Verformungen oder Beschädigungen im Ofen aufgenommen und geeignet platziert werden kann. Das Auflösen der Druckplatte und die Aufnahme des Druckteils auf der Sinterplatte ermöglichen einen schonenden und automatisierten Arbeitsablauf, der eine Beschädigung oder eine Verformung des Druckteils vermeidet.

Unter "Drucken" im Sinne der Erfindung wird ein 3D-Drucken bzw. ein beliebiges additives Verfahren bezeichnet, bei dem Material schichtweise auf bzw. gegen eine Unterlage aufgetragen wird. Dabei wird darauf hingewiesen, dass das Druckteil nicht notwendigerweise mit nur einem Filament schichtweise gefertigt wird. So kann vorgesehen sein, dass das Druckteil mit einer Mehrzahl von Filamenten bzw. Funktionsmaterialien zu einem Multimaterial-Bauteil gedruckt wird.

Eine Ausgestaltung der Erfindung sieht vor, dass das Filament ein Metallpulver aufweist, das aus Kupfer, Edelstahl oder Vergütungsstahl besteht. Materialbeispiele sind Edelstähle vom Typ 17-4PH oder 316L und Vergütungsstahl vom Typ 42CrMo4.

Für die Verwendung von Keramikpulver sehen Ausführungsbeispiele vor, dass das Keramikpulver aus Aluminiumoxid oder Zirkoniumoxid oder allgemein einer Oxidkeramik, Nitridkeramik oder Carbidkeramik oder einer Mischung aus solchen Keramiken besteht. Oxidkeramiken zeichnen sich durch eine besonders große Härte und Beständigkeit gegen hohe Temperaturen aus.

Das Filament ist durch das gewählte Keramik- oder Metallpulver und dem Binder gebildet. Dementsprechend besteht auch das Druckteil aus dem gewählten Pulver und dem Binder. Dadurch, dass der Binder in einem späteren Schritt aus dem Druckteil gelöst wird, bestimmt die Wahl des Pulvers das spätere Material des Fertigteils.

Ein Erfindungsaspekt sieht vor, dass die Druckereinheit dazu ausgebildet ist, das Druckteil kopfüber gegen die Druckplatte zu drucken, wobei die Druckplatte unterseitig einer Grundplatte angeordnet ist. Somit ist die Einheit, die das Druckteil, die Druckplatte und die Grundplatte bilden in seiner Ausgangsposition bereits so angeordnet, dass das Druckteil nach unten gerichtet ist. Somit ist kein Drehen in die Kopfüberposition notwendig. Beim Auflösen der Druckplatte in der Kopfüberposition ist das Druckteil nach unten gerichtet, damit es automatisch durch die Schwerkraft von der Grundplatte abfällt und durch die Sinterplatte aufgenommen werden kann.

In einer alternativen Ausführungsvariante ist die Druckereinheit dazu ausgebildet, das Druckteil von oben auf die Druckplatte zu drucken, wobei die Druckplatte auf einer Grundplatte angeordnet ist. Dies entspricht einer herkömmlichen Anordnung der Druckereinheit. In diesem Beispiel wird das Druckteil in einem späteren Schritt in die Überkopfposition gedreht.

Gemäß eines weiteren Erfindungsaspekt weist die Vorrichtung erste Transportmittel auf, die dazu ausgebildet sind, die Druckplatte mit dem Druckteil in der Überkopfposition oberhalb des Ofens zu positionieren. Dabei wird die Druckplatte mit dem Druckteil und gegebenenfalls der Grundplatte vorzugsweise oberhalb des Ofens, insbesondere oberhalb einer Öffnung des Ofens, positioniert.

Es kann vorgesehen sein, dass die Vorrichtung darüber hinaus zweite Transportmittel aufweist, die dazu ausgebildet sind, eine Relativbewegung in vertikaler Richtung zwischen dem z.B. an seiner Oberseite geöffneten Ofen und der Druckplatte auszuführen, bei der die Druckplatte im Inneren des Ofens positioniert wird. Der Ofen kann demnach beispielsweise vertikal bewegbar sein, sodass das Druckteil im Innenraum des Ofens positioniert wird. Alternativ ist eine Absenkung der Druckplatte und dem Druckteil in den Innenraum des Ofens möglich.

Im Falle einer Verwendung einer Grundplatte sind die ersten Transportmittel und die zweiten Transportmittel dazu ausgebildet, auch die Grundplatte zu transportieren.

In einem weiteren Erfindungsbeispiel ist der Ofen dazu vorgesehen und ausgebildet, auch die Grundplatte aufzunehmen, wobei die Grundplatte derart in den Ofen einsetzbar ist, dass sie eine Wandung des Ofens bildet und den Ofen dabei verschließt. Dabei kann ist beispielsweise vorgesehen, dass die Grundplatte mit einem Ofendeckel verbunden ist oder selbst einen Deckel für den Ofen bildet. Diese Ausführungsvariante ermöglicht in einfacher Weise ohne zusätzliche Maßnahmen ein Verschließen des Ofens nach Aufnahme der Druckplatte und des Druckteils.

In einer Ausgestaltung der Erfindung ist vorgesehen, dass die Steuerung dazu ausgebildet ist, die Sinterplatte nach der Ablage des Druckteils von der Aufnahmeposition vertikal nach unten in eine Sinterposition zu verfahren. Somit kann das Druckteil in der Aufnahmeposition durch die Sinterplatte aufgenommen und vertikal in eine vorzugsweise zentrale Position in einen Innenraum des Ofens positioniert werden. In der Sinterposition kann eine optimale Erhitzung des Druckteils erfolgen.

Für den Sinterprozess kann die Sinterplatte eine zur Reduktion der Haftreibung polierte Oberfläche aufweisen, auf der das Druckteil angeordnet ist. Im Zuge der Sinterung erfolgt eine Schrumpfung des Druckteils. Um den Schrumpfungsprozess nicht zu stören ist vorgesehen, die Oberfläche der Sinterplatte möglichst reibungsarm zu gestalten. Dies ermöglicht eine polierte Oberfläche. Es können jedoch auch weitere Oberflächenbehandlungen wie beispielsweise Beschichtungen vorgesehen sein, die die Haftreibung der Sinterplatte zu reduzieren.

Die Sinterplatte kann aus einer temperaturfesten Keramik bestehen. Beispielsweise kommt dabei eine Oxidkeramik, wie beispielsweise Aluminiumoxid oder Zirconiumoxid zum Einsatz. Oxidkeramiken sind härter, verschleißfester und wärmebeständiger als gewöhnliche Hartmetalle und sind daher für den Einsatz als Material für die Sinterplatte geeignet.

In einer Ausführungsvariante ist vorgesehen, dass die Druckplatte aus einem unter Hitze auflösbaren Material wie biologischen Polylactiden (PLA) oder Wachs besteht. Dabei kann das Material durch thermisches Erwärmen zum Beispiel sich verflüssigen und dann verdampfen und/oder verbrennen oder gleich verdampfen und/oder verbrennen.

In einer weiteren Ausführungsvariante besteht die Druckplatte aus einem chemisch löslichen Material wie Polyvinylalkohol (PVA) oder Acrylnitril-Butadien-Styrol-Copolymere (ABS). Dabei wird die Druckplatte mit einer auflösenden Flüssigkeit besprüht, sodass sich die Druckplatte auflöst. Hierzu weist der Ofen ggf. geeignete Besprühungsmittel auf.

In einem Ausführungsbeispiel ist vorgesehen, dass das Druckteil eine Stützstruktur aufweist, welche dazu ausgebildet ist, das Druckteil an der Sinterplatte abzustützen, wobei die Stützstruktur dazu vorgesehen ist, von dem Fertigteil (d.h. dem fertig gesinterten Druckteil) entfernt zu werden. Die Stützstruktur stellt dabei einen sicheren Halt auf der Sinterplatte bereit und kann auf die Form der Druckplatte angepasst sein.

Die Verwendung von Stützstrukturen erlaubt es, Druckteile herzustellen, die nicht notwendigerweise an ihrer Unterseite plan ausgebildet sind.

Dabei kann die Stützstruktur von dem Fertigteil entformbar sein. Wenn das Druckteil also zu einem Fertigteil gesintert wurde, lassen sich die Stützstrukturen entfernen. Dies geschieht vorteilhafterweise mechanisch durch Abbrechen oder Abschneiden.

Es ist erforderlich, das Druckteil vor oder beim Sintern zu entbindern. Hierzu existieren eine Vielzahl von Möglichkeiten. Eine Ausgestaltung der Erfindung sieht hierzu vor, dass das Druckteil dazu ausgebildet ist, im Ofen unter Temperatureinwirkung thermisch entbindert zu werden. Das Druckteil besteht aus dem Metall- oder Keramikpulver vermischt mit dem Binder. Die Entbinderung dient dem Auslösen des Binders aus dem Druckteil.

Dabei kann unmittelbar vor dem Sinterprozess eine thermische Entbinderung stattfinden. In diesem Falle ist das Druckteil zunächst ein Grünling, der noch aus dem Metall- bzw. Keramikpulver und dem thermisch lösbaren Binder besteht. Durch einen Betrieb des Ofens in einem Entbinderungsbetrieb, bei dem ein bestimmter Temperaturbereich der Entbinderung eingehalten wird, kann eine thermische Entbinderung des Grünlings im Ofen geschehen. Falls die Zusammensetzung des Metall-/Keramikfilaments und die Bauteilgröße des Druckteils es erlauben, kann auf den Entbinderungsschritt vollständig verzichtet werden und der Binder wird rein thermisch beim Hochheizen auf die Sintertemperatur im Ofen ausgetrieben.

In weiteren Ausführungsvarianten erfolgt alternativ eine chemische Entbinderung, bei der der Binder chemisch aus dem Druckteil gelöst wird. Dabei kann die Druckereinheit dazu ausgebildet sein, das Druckteil beim Druckvorgang zu entbindern. Solche Verfahren sind beispielsweise in der WO 2018/209029 A1 beschrieben. Dabei kann vorgesehen sein, dass ein Entbinderungsapplikator in einer kontinuierlichen Bahn der Druckbahn des Extruders folgt und das Druckteil mit einem Entbinderungsmittel besprüht. Somit wird unmittelbar während des Druckvorgangs der Binder chemisch aus dem Druckteil gelöst. Alternativ kann die chemische Entbinderung nach Beendigung des Druckvorgangs geschehen. So kann alternativ eine Besprühung oder ein Eintauchen des Druckteils in ein Flüssigkeitsbecken mit dem chemischen Entbinderungsmittel in Anschluss an den Druckvorgang in der Druckereinheit erfolgen.

In einem weiteren Erfindungsbeispiel ist der Ofen dazu ausgebildet, ein Vakuum oder eine Schutzgasatmosphäre bereitzustellen. Dies ist besonders bei einem möglichen Entbinderungsprozess oder dem Sinterprozess vorgesehen. Dabei ist vorgesehen, dass der Ofen gasdicht abgedichtet. Hierzu kann ein Deckel vorgesehen sein, der flanschartig auf eine Öffnung des Ofens gepresst wird.

Ein weiteres Erfindungsbeispiel sieht vor, dass der Ofen eine durch Flüssigkeit gekühlte Wand aufweist. Bevorzugt ist dabei eine Wasserkühlung vorgesehen, da hiermit ein effizientes und ressourcenschonendes Kühlen des Ofens gewährleistet ist. Darüber hinaus kann vorgesehen sein, dass der Ofen eine Isolierung und ein Heizsystem aufweist, welche Wolfram und/oder Molybdän aufweist. Ein weiteres Ausführungsbeispiel sieht vor, dass der Sinterofen mit einem Induktionsheizsystem versehen ist. In diesem Fall kann zur Anpassung an unterschiedliche Materialien und geometrische Formen des Druckteils ein Suszeptor zur Anwendung gelangen, der durch Induktion erwärmt wird.

Eine weitere Ausführung der Erfindung sieht vor, dass die Druckereinheit dazu ausgebildet ist, mit einem zweiten Filament die Druckplatte zu drucken, bevor das Druckteil auf der Druckplatte gedruckt wird. Das zweite Filament besteht wie die Druckplatte aus einem unter durch chemischen oder thermischen Eintrag auflösbaren Material, also PVA oder ABS beziehungsweise PLA oder Wachs. Es wird über einen zweiten Extruder auf die Grundplatte aufgetragen. Alternativ handelt es sich um eine vorgefertigte Druckplatte.

Weiter kann vorgesehen sein, dass die Druckplatte selbst eine (zweite) Stützstruktur ausbildet, gegen die das Druckteil druckbar ist, wobei die zweite Stützstruktur in der Kopfüberposition oberhalb des Druckteils angeordnet ist. Die zweite Stützstruktur kann jede Abweichung der Oberfläche der Druckplatte von einer planen Ausbildung bzw. jeder 3D-Struktur der Druckplatte sein. Die Ausbildung von Stützstrukturen in der Grundplatte durch das zweite Filament ermöglicht das Erstellen komplexerer Geometrien auch an der Oberseite des Druckteils. So ist es mit Hilfe der zweiten Stützstruktur möglich, in Richtung der Druckplatte ragende Vorsprünge am Druckteil zu bilden, die nicht beim Druck auf eine plane Druckplatte möglich wären. Ein Beispiel solch einer Form wäre ein Druckteil mit einer Grundform des kleingeschriebenen Buchstaben "k", wobei die Druckplatte Strukturen zur Abstützung der beiden oberen Punkte des "k" aufweist.

Eine weitere Ausgestaltung sieht vor, dass das die Sinterplatte an ihrer Oberseite eine Form aufweist, die der Form des Druckteils entspricht. Hierdurch kann das Druckteil sicher auf der Sinterplatte abgesetzt werden, auch wenn es keine plane Unterseite aufweist und ohne die Notwendigkeit von Stützstrukturen. Beispielsweise sind die Sinterplatte an ihrer Oberseite konkav und das Druckteil an seiner Unterseite konvex ausgebildet oder umgekehrt.

Ein weiterer Aspekt der Erfindung betrifft ein Verfahren, bei dem zur Herstellung metallischer und/oder keramischer Teile die Schritte vorgesehen sind:
- schichtweises Drucken eines Druckteils mit mindestens einem Filament, das aus einem Metall- oder Keramikpulver vermischt mit einem Binder besteht, wobei ein Extruder das Filament auf eine Druckplatte druckt,
- Transportieren der Druckplatte mit dem Druckteil zu einem Ofen in eine Überkopfposition, in der das Druckteil an der Unterseite der Druckplatte angeordnet ist,
- Bewegen der Druckplatte mit dem Druckteil relativ zu dem Ofen, wobei die Druckplatte und das Druckteil in der Überkopfposition im Ofen angeordnet wird,
- Abdichten des Ofens,
- Positionieren einer beweglichen Sinterplatte unmittelbar unter dem Druckteil,
- Lösen des Druckteils von der Druckplatte durch Auflösen der Druckplatte, dabei
- Ablegen des Druckteils auf der Sinterplatte, und
- Sintern des Druckteils zu einem Fertigteil.

Das Auflösen der Druckplatte und die Aufnahme der Unterseite des Druckteils durch die Sinterplatte stellen eine schonende Überführung des Druckteils in den Ofen bereit. So löst sich das Druckteil bei Auflösen der Druckplatte automatisch von dieser und wird von der Sinterplatte aufgefangen.

In einer Ausführungsvariante der Erfindung erfolgt das Drucken dabei kopfüber, sodass der Extruder nach oben gerichtet ist und gegen die darüber angeordnete Druckplatte druckt, wobei die Druckplatte unterseitig an einer Grundplatte befestigt ist. In dieser Ausführungsvariante muss das Druckteil nicht gewendet werden, damit es in die Überkopfposition gelangt.

In einer weiteren Ausführungsvariante wird das Druckteil von oben auf die Druckplatte gedruckt, wobei die Druckplatte auf einer Grundplatte angeordnet ist. Anschließend werden Druckplatte und Druckteil in eine Überkopfposition gebracht.

In einem Erfindungsaspekt ist ein schichtweises Drucken der Druckplatte auf die Grundplatte mit einem zweiten Filament vorgesehen, bevor das Druckteil auf die Druckplatte gedruckt wird. Sowohl das Druckteil als auch die Druckplatte werden in dieser Ausführungsvariante somit durch 3D-Druck hergestellt. Hierbei kann vorgesehen sein, dass für den 3D-Druck mehrere Extruder eingesetzt werden, um zwei oder auch mehr Filamente mit unterschiedlichen Funktionsmaterialien im Druckprozess einsetzen zu können. Die Extruder können unterschiedliche Düsen mit unterschiedlichen Düsendurchmesser aufweisen. Alternativ kann ein Extruder vorgesehen sein, der sequenziell mit unterschiedlichen Filamenten versorgt wird und der gegebenenfalls mehrere unterschiedliche Düsen aufweist, über die der 3D-Druck erfolgen kann.

Dabei kann vorgesehen sein, dass an der Druckplatte mit dem zweiten oder einem weiteren Filament eine zweite Stützstruktur ausgebildet wird, gegen die das Druckteil gedruckt wird. Auf diese Weise können auch an der Oberseite komplizierte Geometrien für das Druckteil realisiert werden.

Die Möglichkeit des Einsatzes mehrerer Filamente kann zusätzlich oder alternativ zu einem schichtweisen Drucken der Druckplatte auch dazu genutzt werden, ein aus einer Mehrzahl von Materialien bestehendes Druckteil im 3D-Druck zu drucken, beispielsweise ein Metall/Keramik-Multimaterialbauteil.

Es kann vorgesehen sein, die Sinterplatte nach dem Ablegen des Druckteils auf der Sinterplatte relativ zum Ofen in eine Sinterposition bewegt wird, in der das Sintern des Druckteils zu einem Fertigteil erfolgt. Dabei entspricht die Sinterposition nicht der Aufnahmeposition und liegt diese vorzugsweise zentral im Innenraum des Ofens.

Nach dem Abdichten des Ofens ist in einem weiteren Ausführungsbeispiel vorgesehen, dass das Druckteil nach dem Abdichten des Ofens im Innenraum des Ofens entbindert wird. Die Entbinderung dient dabei dem Auslösen des Binders aus dem Druckteil und geschieht vor dem oder beim Sinterprozess. Dabei sind sowohl eine chemische als auch eine thermische Entbinderung möglich.

Eine weitere Variante der Erfindung sieht vor, dass beim Drucken des Druckteils eine Stützstruktur an das Druckteil gedruckt wird, die beim Ablegen des Druckteils auf der Sinterplatte das Druckteil an der Sinterplatte abstützt. Dabei kann vorgesehen sein, dass nach Abschluss des Sintervorgangs die Hilfsstrukturen von dem Fertigteil gelöst werden. Das Fertigteil ist das Druckteil, welches abschließend gesintert wurde.

Die Erfindung wird nachfolgend unter Bezugnahme auf die Figuren der Zeichnung anhand mehrerer Ausführungsbeispiele näher erläutert. Dabei zeigen:
- Fig. 1: eine Darstellung einer Druckereinheit, in der eine lösbare Druckplatte kopfüber gegen eine Grundplatte aufgetragen wird;
- Fig. 2: eine Darstellung der Druckereinheit gemäß Fig. 2, wobei ein Druckteil kopfüber gegen die Druckplatte gedruckt wird;
- Fig. 3: die Einheit aus Grundplatte, Druckplatte und Druckteil gemäß Fig. 2, wobei die Einheit oberhalb eines Ofens positioniert ist;
- Fig. 4: die Anordnung gemäß Fig. 3, wobei die Grundplatte in eine obere Ofenwand eingelassen ist und der Ofen mit einem Deckel abgedichtet ist;
- Fig. 5: die Anordnung gemäß Fig. 4, bei der eine Sinterplatte unter dem Druckteil positioniert und der Ofen die Druckplatte erhitzt;
- Fig. 6: die Anordnung gemäß Fig. 5, bei der die Druckplatte aufgelöst und das Druckteil auf der Sinterplatte abgelegt ist;
- Fig. 7: die Anordnung gemäß Fig. 6, bei die Sinterplatte in einer Sinterposition positioniert ist und eine Sinterung zu einem Fertigteil stattfindet;
- Fig. 8: eine alternative Ausgestaltung entsprechend der Fig. 7, wobei das Druckteil mit einer Stützstruktur versehen ist;
- Fig. 9: die Anordnung gemäß Fig. 7, bei die der Deckel des Ofens und die Grundplatte angehoben sind und das Fertigteil auf der Sinterplatte aus dem Ofen entnehmbar ist; und
- Fig. 10: ein Ablaufdiagramm eines Verfahrens zu Herstellung metallischer oder keramischer Teile.

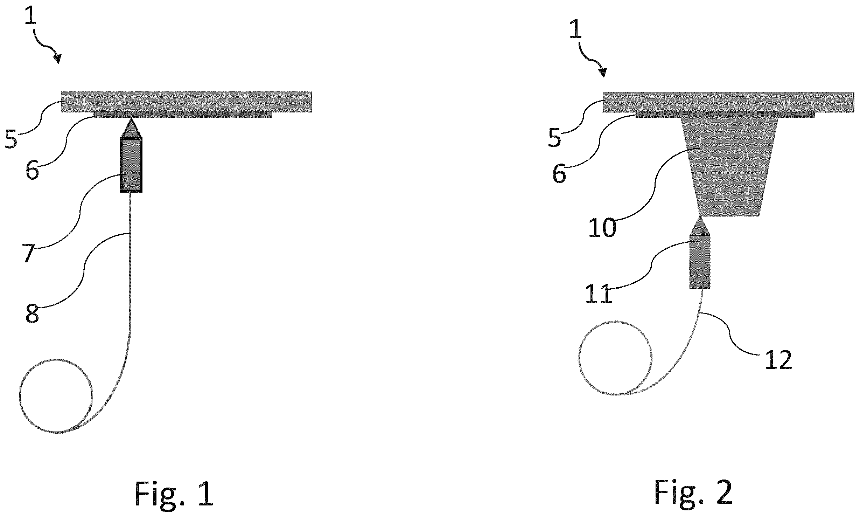

Die Figuren 1 bis 9 stellen allgemein eine Vorrichtung zur Herstellung metallischer und/oder keramischer Teile dar, die eine Druckereinheit 1 für additive Fertigung und einen Ofen 2 umfasst.

Es sind als "Fused Deposition Modeling" (FDM) oder "Fused Filament Fabrication" (FFF) bezeichnete Fertigungsverfahren bekannt, bei denen in einer Druckereinheit ein Filament schichtweise zu einem metallischen oder keramischen Grünling gefertigt wird. Das Filament umfasst dabei ein Metallpulver oder ein Keramikpulver und ist mit einem typischerweise organischen Binder vermischt. Der Grünling wird in an sich bekannter Weise unter Entfernung des Binders entbindert und gesintert. Dabei entsteht ein metallisches oder keramisches Teil, das bis zu 99,9 % der Dichte eines aus einem entsprechenden Material gegossenen Teils aufweist.

Die Figur 1 zeigt eine entsprechende Druckereinheit 1. Die Druckereinheit 1 dient dazu, ein Druckteil zu erstellen, ehe es gesintert wird. Die Druckereinheit 1 weist eine Grundplatte 5 auf. Unterseitig an der Grundplatte 5 ist eine Druckplatte 6 angeordnet. Die Druckplatte 6 besteht aus einem Material, welches chemisch oder thermisch auflösbar ist. Als Beispiel für chemisch auflösbare Materialien sind Polyvinylalkohol (PVA) oder Acrylnitril-Butadien-Styrol-Copolymere (ABS) vorgesehen. Dabei kann die Druckplatte 6 zur Auflösung mit einer lösenden Flüssigkeit besprüht werden. Beispiele für ein thermisch auflösbares Material sind biologische Polylactide (PLA) oder Wachs. Dabei kann durch Erhitzen das Material gelöst und anschließend verdampft oder abgebrannt werden. Ein Auflösen der Druckplatte 6 erfolgt allerdings erst in einem späteren Verfahrensschritt, wie noch erläutert werden wird.

In dem hier dargestellten Beispiel wird die Druckplatte 6 durch ein Filament 8 gebildet, welches durch einen ersten Extruder 7 von unten an die Grundplatte 5 gedruckt wird. Bei dem Filament 8 handelt es sich beispielsweise um ein Filament aus Kunststoff, das zur Erzeugung der Druckplatte 6 eingesetzt wird. Das Filament besteht beispielsweise aus den oben genannten Materialien, die auflösbar sind.

Es kann alternativ vorgesehen sein, dass die Druckplatte 6 vor Einbringen in die Druckeinheit 2 an der Grundplatte 5 angeordnet worden ist und nicht durch die Druckeinheit 2 aufgetragen wird. Die Druckplatte 6 kann wie dargestellt als plane Platte ausgebildet sein oder eine 3D-Struktur aufweisen.

Im dargestellten Ausführungsbeispiel ist ein Drucken überkopf dargestellt, bei dem das Filament 8 unterseitig gegen die darüber liegende Grundplatte 5 aufgetragen wird. In weiteren Ausführungsbeispielen kann alternativ vorgesehen sein, dass das Filament 8 von oben gegen die darunter liegende Grundplatte 6 aufgetragen wird. Dann ist die Druckplatte 6 entsprechend oberhalb der Grundplatte 5 angeordnet. Eine weitere Abwandlung sieht vor, dass die Druckplatte 6 statt an einer Grundplatte an einer anderen Struktur fixiert ist.

Die Fig. 2 stellt den Druck eines Druckteils 10 dar. Ein weiteres Filament 12 wird durch einen zweiten Extruder 11 (oder alternativ den Extruder 7 der Figur 1) kopfüber schichtweise auf die Druckplatte 6 aufgetragen. So wird unterseitig der Druckplatte 6 ein Druckteil 10 gebildet. Dementsprechend ist das Druckteil 10 an der Druckplatte 6 hängend ausgebildet. Das Filament 12 besteht aus einem Metall- oder Keramikpulver, dass mit einem Binder vermischt ist. Das Metallpulver kann aus Materialien wie Kupfer, Edelstahl, beispielsweise vom Typ 17-4PH oder 316L, oder Vergütungsstahl, beispielsweise 42CrMo4, bestehen. Als Keramikpulver wird beispielsweise Aluminiumoxid oder Zirkoniumoxid eingesetzt.

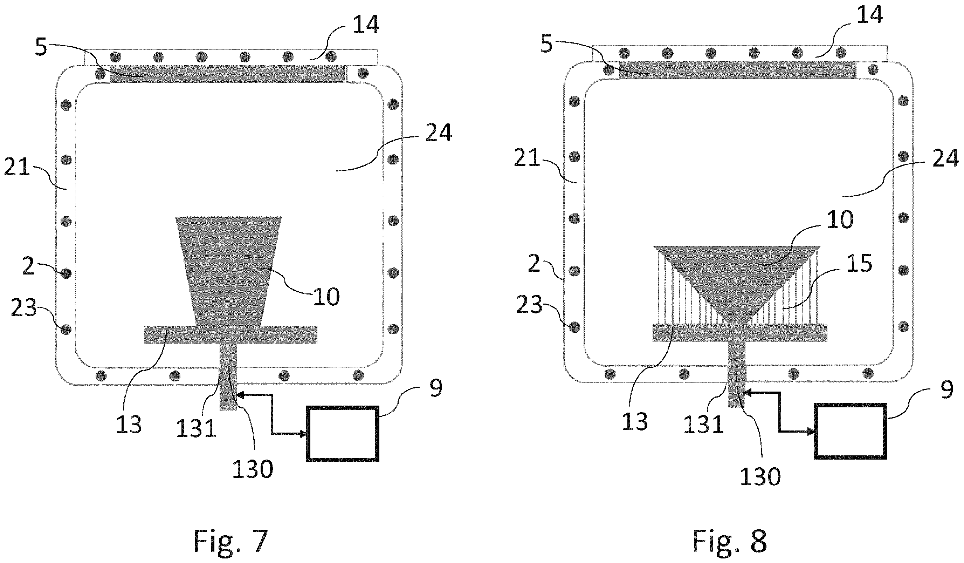

Das Druckteils 10 wird zwischen dem Druckvorgang und dem Sintervorgang entbindert. Das Druckteil 10 ist vor dem Entbindern ein Grünling, da der Binder noch in dem Bauteil enthalten ist. Durch Entfernen des Binders wird das Druckteil zu einem Bräunling. Die Entbinderung kann sowohl durch thermischen als auch durch chemischen Eintrag geschehen. Eine thermische Entbinderung kann unmittelbar vor dem Sintervorgang im Sinterofen erfolgen, wie anhand der Fig. 7 näher erläutert wird.

Eine chemische Entbinderung kann unmittelbar nach dem Druckvorgang oder sogar beim Druckvorgang stattfinden. Wie beispielhaft aus der WO 2018/209029 A1 bekannt, kann dabei vorgesehen sein, dass ein Entbinderungsapplikator einer Druckbahn des Extruders folgt und unmittelbar während des Druckvorgangs den Binder chemisch aus dem Druckteil löst. Alternativ ist auch eine chemische Entbinderung in Anschluss an den Druck möglich, beispielsweise durch ein Besprühen oder ein Tauchen des Druckteils in ein Becken mit Entbinderungsflüssigkeit.

Es wird darauf hingewiesen, dass die Druckeinheit 1 in den Fig. 1 und 2 nur teilweise und schematisch dargestellt sind. Die Druckeinheit umfasst weitere Komponenten wie eine Steuerung zur Führung des Extruders 7, 11 sowie eine oder mehrere Zuführeinrichtungen für das Filament 8, 12, wie dem Fachmann bekannt ist.

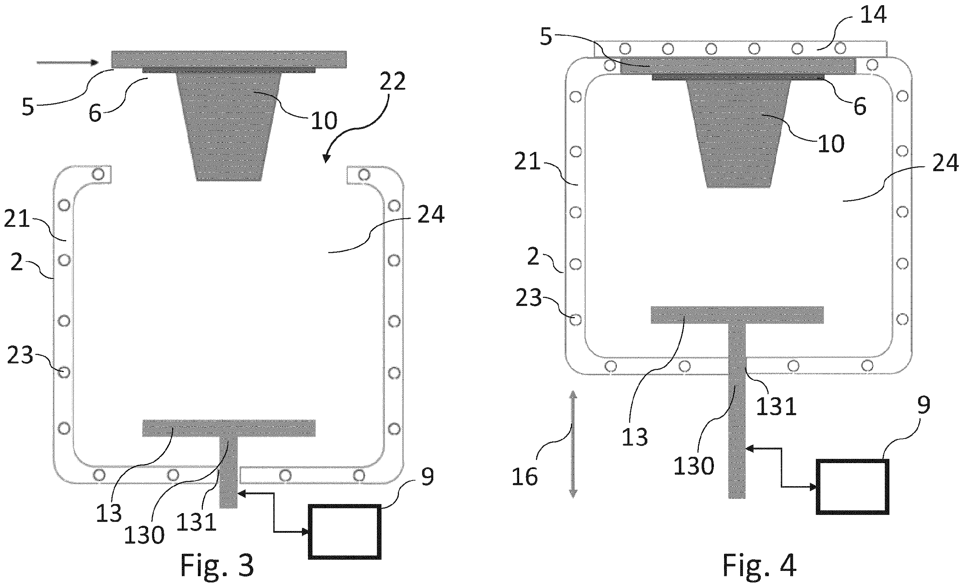

In der Fig. 3 ist eine veränderte Position der aus Grundplatte 5, Druckplatte 6 und Druckteil 10 gebildeten Einheit dargestellt. Dabei ist die Grundplatte 5 mit der Druckplatte 6 und dem Druckteil 10 zu einem Ofen 2 bewegt worden und befindet sich in einer Überkopfposition, in der die Einheit kopfüber angeordnet ist, sodass das Druckteil 10 von der Druckplatte 6 nach unten absteht. Beispielsweise ist die genannte Einheit aus der Position der Fig. 2 in horizontaler Richtung über den Ofen 2 verschoben worden

Der Ofen 2 weist eine Wandung 21 auf, welche an einer oberen Seite eine Öffnung 22 besitzt, in welche die Grundplatte 5 eingelassen werden kann. Dabei ist die Grundplatte 5 zentriert oberhalb der Öffnung 22 positioniert. Hierzu können nicht dargestellte Transportmittel, wie z.B. Transportschienen oder Transportarme, vorgesehen sein.

An der unteren Seite des Ofens 2 ragt eine Sinterplatte 13 in einen Innenraum 24 des Ofens hinein. Die Sinterplatte 13 ist am oberen Ende eines beweglichen Arms 130 angeordnet, der in vertikaler Richtung beweglich und an einem Durchgang 131 in den Ofen 2 abgedichtet ist. Die bewegliche Sinterplatte 13 bzw. der Arm 130 wird durch eine schematisch dargestellte Steuereinheit bzw. Steuerung 9 in ihrer vertikalen Position gesteuert. In der dargestellten Ansicht ist der Ofen 2 nicht erhitzt, welches durch nicht ausgefüllt dargestellte Heizstäbe 23 in der Wandung des Ofens 21 schematisch dargestellt ist. Die Sinterplatte 13 besteht beispielsweise aus einer temperaturfesten Oxidkeramik, beispielsweise Aluminiumoxid oder Zirkoniumoxid.

In der Erfindungsvariante, bei der der Druck nicht überkopf stattgefunden hat, ist die Einheit aus dem Druckteil 10, der Druckplatte 6 und der Grundplatte 5 durch Transportmittel gedreht worden, sodass das Druckteil 10 auch in diesem Fall überkopf unterhalb der Grundplatte 5 angeordnet ist.

Die Fig. 4 stellt eine weitere Position dar, in der die Grundplatte 5 mit der Druckplatte 6 und dem Druckteil 10 im Innenraum des Ofens 24 angeordnet ist. Dabei ist die Grundplatte 5 in die Wandung 21 des Ofens eingelassen und bildet ein Teil desselben. Hierzu ist der Ofen 2 mit der Sinterplatte 13 in vertikaler Richtung durch nicht dargestellte zweite Transportmittel verschoben worden, sodass die Öffnung 22 die Grundplatte 5 umschließt. Die vertikale Bewegung des Ofens 2 ist durch den Pfeil 16 symbolisiert. In weiteren Ausführungsbeispielen kann es alternativ vorgesehen sein, dass die Grundplatte 5 mit der Druckplatte 6 und dem Druckteil 10 über Transportmittel eine vertikale Bewegung in den Ofen 2 ausführt. Es ist dabei entscheidend, dass eine vertikale Relativbewegung zwischen Ofen 2 und Druckteil 10 stattfindet, bei der das Druckteil 10 im Ofen 2 positioniert wird.

In der Position der Fig. 4 ist das Druckteil 10 weiterhin in einer Überkopfposition, sodass die Einheit aus Druckteil 10, Druckplatte 6 und Grundplatte 5 kopfüber angeordnet und das Druckteil 10 im Innenraum 24 des Ofens platziert ist.

Zur weiteren Abdichtung des Ofens 2 ist oberhalb der Grundplatte 5 ein Deckel 14 auf die Grundplatte 5 aufgesetzt, welcher den Innenraum des Ofens 24 wie einen Flansch abdichtet. Die Abdichtung erlaubt die Bildung eines Vakuums oder einer Schutzgasatmosphäre z.B. mit Wasserstoff in dem Innenraum 24 des Ofens 2. Es kann vorgesehen sein, dass der Ofen 2 eine wassergekühlte Wand aufweist. Darüber hinaus weist der Ofen 2 eine nicht dargestellte Isolierung auf. Ein Heizsystem ist durch die Heizstäbe 23 symbolisiert, welche in Ausführungsvarianten die Bestandteile Wolfram und/oder Molybdän aufweisen.

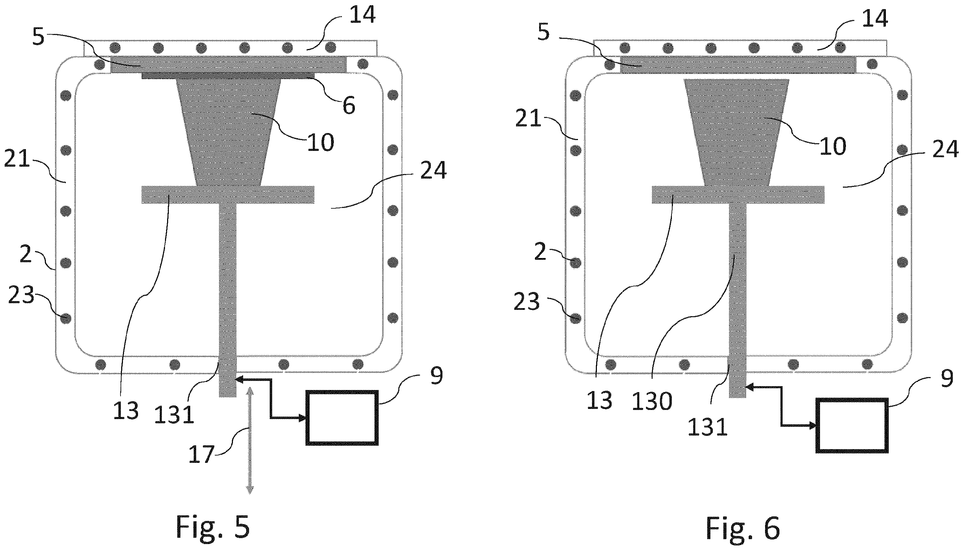

In der Fig. 5 ist die Sinterplatte 13 in eine Aufnahmeposition bewegt worden, in der die Sinterplatte 13 unmittelbar an die Unterseite des Druckteils 10 angrenzt. Dabei können sich Sinterplatte 13 und Druckteil 10 berühren. Hierzu ist die Sinterplatte 13 durch die Steuerung 9 in vertikaler Richtung in die Aufnahmeposition unmittelbar unterhalb des Druckteils 10 bewegt worden. Dies ist durch den Pfeil 17 symbolisiert. In der Aufnahmeposition kann der Ofen 2 erhitzt werden, welches durch die nun ausgefüllten Heizstäbe 23 in der Wandung 21 des Ofens 2 dargestellt ist.

In der Fig. 6 ist der Zustand dargestellt, in der die Druckplatte 6 durch Hitze oder chemisches Lösen aufgelöst worden ist. Im Falle einer chemischen Auflösung der Grundplatte 6 ist hierzu vorgesehen, die Druckplatte 6 mit einem chemischen Mittel zu besprühen. Aufgrund der Auflösung der Druckplatte 6 haftet das Druckteil 10 nicht mehr an der Grundplatte 5 und ist von dieser gelöst. Durch die Schwerkraft erfolgt diese Ablösung automatisch ohne weitere Maßnahmen. Gleichzeitig ist sichergestellt, dass das Druckteil 10 nun durch die Sinterplatte 13, welche in der Aufnahmeposition unmittelbar unterseitig von dem Druckteil 10 positioniert ist, sicher aufgenommen und von dieser getragen wird. Damit wird eine zuverlässige und einfache Umlagerung von der Druckplatte 6 zur Sinterplatte 13 erreicht.

Die Fig. 7 stellt den Ofen 2 in einer Position dar, in der die Sinterplatte 13 mit dem auf der Sinterplatte 13 aufgenommenen Druckteil 10 in einer Sinterposition zentral in dem Innenraum 24 des Ofens 2 positioniert worden ist. In der Sinterposition wird das Druckteil 10 zu einem Fertigteil gesintert.

Dabei kann vor dem Sinterprozess eine thermische Entbinderung stattfinden. Durch einen Betrieb des Ofens 2 in einem Entbinderungsbetrieb, bei dem ein bestimmter Temperaturbereich der Entbinderung eingehalten wird, kann eine thermische Entbinderung des Grünlings im Ofen 2 erfolgen. Falls die Zusammensetzung des Metall- oder Keramikfilaments und die Bauteilgröße des Druckteils 10 es erlauben, kann auf den Entbinderungsschritt vollständig verzichtet werden und der Binder wird rein thermisch beim Hochheizen auf die Sintertemperatur im Ofen 2 ausgetrieben.

Dabei kann sowohl für die thermische als auch für die chemische Entbinderung die Position von Druckteil 10 und Sinterplatte 13 von der Sinterposition verschieden sein.

Für eine effektive Durchführung des Prozesses der Sinterung ist vorgesehen, dass die Sinterplatte 13 an ihrer Oberfläche eine geringe Haftreibung aufweist, um eine Schrumpfung des Druckteils 10 beim Sinterprozess nicht zu behindern und ruckfrei zu ermöglichen. Eine verringerte Haftreibung wird beispielsweise durch Polieren der Oberfläche erreicht. Alternativ können weitere Möglichkeiten einer Verringerung der Oberflächenreibung vorgesehen sein, beispielsweise durch eine Beschichtung.

Die Fig. 8 stellt den Ofen 2 in der gleichen Position wie in der Fig. 7 dar, wobei ein alternatives Ausführungsbeispiel des Druckteils 10 gezeigt ist, welches Stützstrukturen 15 aufweist. Die Stützstrukturen 15 sind bereits in der Druckereinheit 1 beim 3D-Druck gebildet worden. Anschließend hat das Druckteil 10 mit den Stützstrukturen 15 sämtliche anhand der vorherigen Figuren dargestellten Bearbeitungsschritte durchlaufen. Die Stützstrukturen 15 dienen der Stabilität der Druckteils 10 auf der Sinterunterlage 13 vor dem Sinterprozess. Sie sind insbesondere sinnvoll, wenn das Druckteil 10 an seiner Unterseite nicht plan ausgebildet ist und nicht schon aufgrund seiner Form fest auf der Sinterunterlage 13 steht, ohne die Stützstrukturen gewissermaßen umfallen würde.

Es ist alternativ auch möglich, dass die Form der Sinterplatte 13 der Form des Druckteils 10 und/oder der Stützstruktur 15 angepasst ist. So ist beispielsweise eine trichterförmige Sinterplatte 13 einsetzbar, wenn das Druckteil 10 nach unten konisch ausgebildet ist.

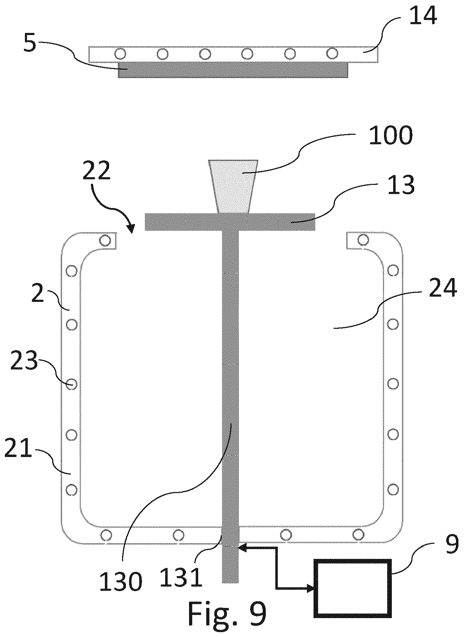

Die Fig. 9 stellt den Ofen 2 in einem Zustand dar, in dem das Druckteil zu einem Fertigteil 100 gesintert wurde und aus dem Ofen entnommen wird. Die Grundplatte 5 und der Deckel 14 sind dabei vom Ofen 2 abgenommen, sodass die Öffnung 22 des Ofens 2 wieder frei ist. Die Sinterplatte 13 ist in Richtung der Öffnung 22 angehoben und das auf der Sinterplatte 13 befindliche gesinterte Druckteil 10 kann aus dem Ofen entnommen werden.

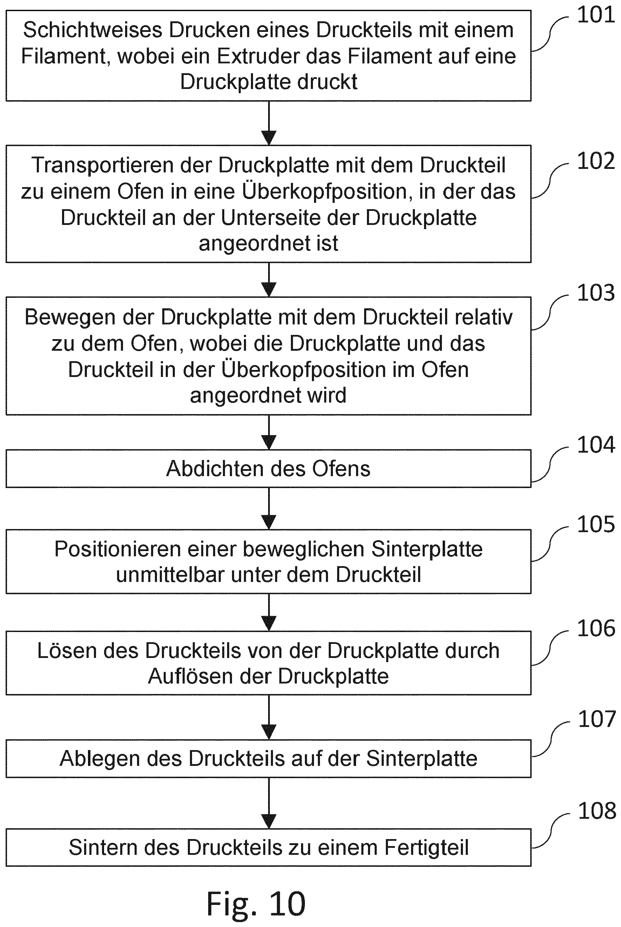

Die Fig. 10 stellt ein Verfahren zur Herstellung metallischer und/oder keramischer Teile dar. Zunächst erfolgt in Schritt 101 ein schichtweises Drucken eines Druckteils mit einem Filament, wobei ein Extruder das Filament auf eine Druckplatte druckt. Anschließend wird die Druckplatte mit dem Druckteil zu einem Ofen transportiert, wobei sie sich in einer Überkopfposition befindet, in der das Druckteil an der Unterseite der Druckplatte angeordnet ist, Schritt 102. Dabei kann vorgesehen sein, dass die Druckplatte um 180° gedreht wird, wenn das Druckteil nicht von vorherein überkopf gedruckt wurde.

Weiter wird in Schritt 103 die Druckplatte mit dem Druckteil relativ zu dem Ofen bewegt, wobei die Druckplatte und das Druckteil in der Überkopfposition im Ofen angeordnet werden. Der Ofen wird abgedichtet, Schritt 104, und eine bewegliche Sinterplatte unmittelbar unter dem Druckteil positioniert, Schritt 105. Dabei kann die Sinterplatte in Kontakt mit der Unterseite des Druckteils treten. Die Reihenfolge der Schritte 104, 105 kann auch umgekehrt sein.

Anschließend wird in Schritt 106 das Druckteil von der Druckplatte gelöst, indem die Druckplatte aufgelöst wird. Wie oben beschrieben, kann die Druckplatte chemisch oder thermisch aufgelöst werden. Mit dem Auflösen der Druckplatte wird das Druckteil automatisch schonend auf der Sinterplatte abgelegt, Schritt 107. Anschließend wird das Druckteil zu einem Fertigteil gesintert, Schritt 108, wobei vorgesehen sein kann, dass die Sinterplatte hierfür in eine andere Position im Ofen verfahren wird.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Weiter wird darauf hingewiesen, dass beliebige der beschriebenen Merkmale separat oder in Kombination mit beliebigen anderen Merkmalen eingesetzt werden können, sofern sie sich nicht gegenseitig ausschließen. Die Offenbarung dehnt sich auf alle Kombinationen und Unterkombinationen eines oder mehrerer Merkmale aus, die hier beschrieben werden und umfasst diese. Sofern Bereiche definiert sind, so umfassen diese sämtliche Werte innerhalb dieser Bereiche sowie sämtliche Teilbereiche, die in einen Bereich fallen.

## Patentansprüche

1. Vorrichtung zur Herstellung metallischer und/oder keramischer Teile, die aufweist:
- eine Druckereinheit (1), in der ein metallisches und/oder keramisches Druckteil (10) schichtweise aus mindestens einem Filament (12), das aus einem Metall- oder Keramikpulver vermischt mit einem Binder besteht, gefertigt wird, wobei das Druckteil (10) auf eine Druckplatte (6) gedruckt wird,
- einen Ofen (2), welcher dazu ausgebildet ist, das Druckteil (10) auf einer Sinterplatte (13) zu einem Fertigteil (100) zu sintern,
- wobei der Ofen (2) dazu ausgebildet ist, die Druckplatte (6) mit dem Druckteil (10) in einer Überkopfposition, in der das Druckteil (10) an der Unterseite der Druckplatte (6) angeordnet ist, aufzunehmen, und die Druckplatte (6) durch chemischen oder thermischen Eintrag aufzulösen,
**dadurch gekennzeichnet, dass**
- der Ofen (2) eine Steuerung (9) aufweist, die dazu vorgesehen ist, die im Ofen (2) angeordnete Sinterplatte (13) in ihrer vertikalen Position zu verstellen, und
- die Steuerung (9) dazu ausgebildet ist, eine Steuerung derart vorzunehmen, dass die Sinterplatte (13) in eine obere Aufnahmeposition direkt unterhalb des Druckteils (10) verfahren wird, bevor die Druckplatte aufgelöst wird, so dass das Druckteil (10) bei Auflösen der Druckplatte (6) auf der Sinterplatte (13) abgelegt wird.

2. Vorrichtung nach Anspruch 1, **dadurch gekennzeichnet, dass** die Druckereinheit (1) dazu ausgebildet ist, das Druckteil (10) kopfüber gegen die Druckplatte (6) zu drucken, wobei die Druckplatte (6) unterseitig einer Grundplatte (5) angeordnet ist.

3. Vorrichtung nach Anspruch 1, **dadurch gekennzeichnet, dass** die Druckereinheit (1) dazu ausgebildet ist, das Druckteil (10) von oben auf die Druckplatte (6) zu drucken, wobei die Druckplatte (6) auf einer Grundplatte (5) angeordnet ist.

4. Vorrichtung nach einem der vorangehenden Ansprüche, **dadurch gekennzeichnet, dass** die Vorrichtung erste Transportmittel aufweist, die dazu ausgebildet sind, die Druckplatte (6) mit dem Druckteil (10) in der Kopfüberposition oberhalb des Ofens (2) zu positionieren.

5. Vorrichtung nach einem der vorangehenden Ansprüche, soweit rückbezogen auf Anspruch 2 oder 3, **dadurch gekennzeichnet, dass** die Vorrichtung zweite Transportmittel aufweist, die dazu ausgebildet sind, eine Relativbewegung in vertikaler Richtung zwischen dem an seiner Oberseite geöffneten Ofen (2) und der Druckplatte (6) auszuführen, bei der die Druckplatte (6) im Inneren des Ofens (2) positioniert wird.

6. Vorrichtung nach einem der vorangehenden Ansprüche, soweit rückbezogen auf Anspruch 2 oder 3, **dadurch gekennzeichnet, dass** der Ofen (2) dazu vorgesehen und ausgebildet ist, auch die Grundplatte (5) aufzunehmen, wobei die Grundplatte (5) derart in den Ofen (2) einsetzbar ist, dass sie eine Wandung (21) des Ofens (2) bildet und den Ofen (2) dabei verschließt.

7. Vorrichtung nach einem der vorangehenden Ansprüche, **dadurch gekennzeichnet, dass** die Steuerung (9) dazu ausgebildet ist, die Sinterplatte (13) nach der Ablage des Druckteils (10) von der Aufnahmeposition vertikal nach unten in eine Sinterposition zu verfahren.

8. Vorrichtung nach einem der vorangehenden Ansprüche, **dadurch gekennzeichnet, dass** die Sinterplatte (13) zur Reduktion der Haftreibung eine polierte Oberfläche aufweist, auf der das Druckteil (10) angeordnet ist.

9. Vorrichtung nach Anspruch einem der vorgegangenen Ansprüche, **dadurch gekennzeichnet, dass** die Druckereinheit (1) dazu ausgebildet ist, mit einem zweiten Filament (8) die Druckplatte (6) zu drucken, bevor das Druckteil (10) auf der Druckplatte (6) gedruckt wird.

10. Verfahren zur Herstellung metallischer und/oder keramischer Teile, das die Schritte aufweist:
- schichtweises Drucken eines Druckteils (10) mit mindestens einem Filament (12), das aus einem Metall- oder Keramikpulver vermischt mit einem Binder besteht, wobei ein Extruder (11) das Filament (12) auf eine Druckplatte (6) druckt,
- Transportieren der Druckplatte (6) mit dem Druckteil (10) zu einem Ofen (2) in eine Überkopfposition, in der das Druckteil (10) an der Unterseite der Druckplatte (6) angeordnet ist,
- Bewegen der Druckplatte (6) mit dem Druckteil (10) relativ zu dem Ofen (2), wobei die Druckplatte (6) und das Druckteil (10) in der Überkopfposition im Ofen angeordnet wird,
- Abdichten des Ofens (2),
- Positionieren einer beweglichen Sinterplatte (13) unmittelbar unter dem Druckteil (10),
- Lösen des Druckteils (10) von der Druckplatte (6) durch chemischen oder thermischen Auflösen der Druckplatte (6), dabei
- Ablegen des Druckteils (10) auf der Sinterplatte (13), und
- Sintern des Druckteils (10) zu einem Fertigteil (100).

11. Verfahren nach Anspruch 10,
**dadurch gekennzeichnet, dass** das Drucken kopfüber erfolgt, sodass der Extruder (11) nach oben gerichtet ist und gegen die darüber angeordnete Druckplatte (6) druckt, wobei die Druckplatte (6) unterseitig an einer Grundplatte (5) befestigt ist.

12. Verfahren nach Anspruch 10 oder 11,
**dadurch gekennzeichnet, dass** beim Drucken des Druckteils (10) eine Stützstruktur (15) an das Druckteil (10) gedruckt wird, die beim Ablegen des Druckteils (10) auf der Sinterplatte (13) das Druckteil (10) an der Sinterplatte (13) abstützt.

13. Verfahren nach Anspruch 10, 11 oder 12, **dadurch gekennzeichnet, dass** die Sinterplatte (13) an ihrer Oberseite eine Form aufweist, die der Form des Druckteils (10) entspricht.

## Claims

1. Apparatus for production of metallic and/or ceramic parts, having:
- a printer unit (1) in which a metallic and/or ceramic printed part (10) is manufactured in layers from at least one filament (12) consisting of a metal powder or ceramic powder mixed with a binder, wherein the printed part (10) is printed onto a printing plate (6),
- an oven (2) designed to sinter the printed part (10) on a sintering plate (13) to give a finished part (100),
- wherein the oven (2) is designed to accommodate the printing plate (6) together with the printed part (10) in an upside-down position in which the printed part (10) is disposed on the underside of the printed plate (6), and to dissolve the printing plate (6) by a chemical or thermal input,
**characterized in that**
- the oven (2) has a controller (9) intended to adjust the vertical position of the sintering plate (13) disposed in the oven (2), and
- the controller (9) is designed to implement control **in that** the sintering plate (13) is moved into an upper receiving position directly beneath the printed part (10) before the printing plate is dissolved, such that the printed part (10) is deposited on the sintering plate (13) on dissolution of the printing plate (6).

2. Apparatus according to Claim 1, **characterized in that** the printer unit (1) is designed to print the printed part (10) in the upside-down position against the printing plate (6), wherein the printing plate (6) is disposed on the underside of a base plate (5).

3. Apparatus according to Claim 1, **characterized in that** the printer unit (1) is designed to print the printed part (10) from above onto the printing plate (6), wherein the printing plate (6) is disposed on a base plate (5).

4. Apparatus according to any of the preceding claims, **characterized in that** the apparatus has first transport means designed to position the printing plate (6) together with the printed part (10) in the upside-down position above the oven (2).

5. Apparatus according to any of the preceding claims, where they refer back to Claim 2 or 3, **characterized in that** the apparatus has second transport means designed to execute relative movement in vertical direction between the oven (2) which is open at its top end and the printing plate (6), in which the printing plate (6) is positioned within the oven (2).

6. Apparatus according to any of the preceding claims, where they refer back to Claim 2 or 3, **characterized in that** the oven (2) is intended and designed also to accommodate the base plate (5), wherein the base plate (5) is insertable into the oven (2) such that it forms a wall (21) of the oven (2) and hence closes the oven (2).

7. Apparatus according to any of the preceding claims, **characterized in that** the controller (9) is designed to move the sintering plate (13) from the receiving position vertically downward into a sintering position after the printed part (10) has been deposited.

8. Apparatus according to any of the preceding claims, **characterized in that** the sintering plate (13), for reduction of sticking friction, has a polished surface on which the printed part (10) is disposed.

9. Apparatus according to any of the preceding claims, **characterized in that** the printer unit (1) is designed to print the printing plate (6) with a second filament (8) before the printed part (10) is printed on the printing plate (6) .

10. Method of producing metallic and/or ceramic parts, having the steps of:
- printing a printed part (10) in layers with at least one filament (12) consisting of a metal powder or ceramic powder mixed with a binder, wherein an extruder (11) prints the filament (12) on a printing plate (6),
- transporting the printing plate (6) together with the printed part (10) to an oven (2) in an upside-down position in which the printed part (10) is disposed on the underside of the printing plate (6),
- moving the printing plate (6) together with the printed part (10) relative to the oven (2), wherein the printing plate (6) and the printed part (10) are arranged in the upside-down position in the oven,
- sealing the oven (2),
- positioning a movable sintering plate (13) immediately beneath the printed part (10),
- releasing the printed part (10) from the printing plate (6) by chemical or thermal dissolution of the printing plate (6), while
- depositing the printed part (10) on the sintering plate (13), and
- sintering the printed part (10) to give a finished part (100).

11. Method according to Claim 10, **characterized in that** the printing is effected in an upside-down manner, such that the extruder (11) is directed upward and prints against the printing plate (6) disposed above it, wherein the printing plate (6) is secured on the underside of a base plate (5).

12. Method according to Claim 10 or 11, **characterized in that** the printing of the printed part (10) includes printing a support structure (15) onto the printed part (10) which braces the printed part (10) on the sintering plate (10) when the printed part (10) is deposited on the sintering plate (13).

13. Method according to Claim 10, 11 or 12, **characterized in that** the sintering plate (13) has a shape on its upper side that corresponds to the shape of the printed part (10).

## Revendications

1. Dispositif pour la fabrication de pièces métalliques et/ou céramiques, qui comprend :
- une unité imprimante (1), dans laquelle une pièce imprimée métallique et/ou céramique (10) est fabriquée par couches à partir d'au moins un filament (12) qui est constitué d'une poudre métallique ou céramique mélangée à un liant, la pièce imprimée (10) étant imprimée sur une plaque d'impression (6),
- un four (2), qui est configuré pour fritter la pièce imprimée (10) sur une plaque de frittage (13) en une pièce finie (100),
- le four (2) étant configuré pour recevoir la plaque d'impression (6) avec la pièce imprimée (10) dans une position renversée dans laquelle la pièce imprimée (10) est agencée sur le côté inférieur de la plaque d'impression (6), et dissoudre la plaque d'impression (6) par apport chimique ou thermique,
**caractérisé en ce que**
- le four (2) présente une commande (9), qui est prévue pour déplacer la plaque de frittage (13) agencée dans le four (2) dans sa position verticale, et
- la commande (9) est configurée pour effectuer une commande de telle sorte que la plaque de frittage (13) est déplacée dans une position de réception supérieure directement en dessous de la pièce imprimée (10) avant que la plaque d'impression ne soit dissoute, de telle sorte que la pièce imprimée (10) est déposée sur la plaque de frittage (13) lors de la dissolution de la plaque d'impression (6).

2. Dispositif selon la revendication 1, **caractérisé en ce que** l'unité imprimante (1) est configurée pour imprimer la pièce imprimée (10) renversée contre la plaque d'impression (6), la plaque d'impression (6) étant agencée sur le côté inférieur d'une plaque de base (5).

3. Dispositif selon la revendication 1, **caractérisé en ce que** l'unité imprimante (1) est configurée pour imprimer la pièce imprimée (10) par le haut sur la plaque d'impression (6), la plaque d'impression (6) étant agencée sur une plaque de base (5).

4. Dispositif selon l'une quelconque des revendications précédentes, **caractérisé en ce que** le dispositif présente des premiers moyens de transport, qui sont configurés pour positionner la plaque d'impression (6) avec la pièce imprimée (10) dans la position renversée au-dessus du four (2).

5. Dispositif selon l'une quelconque des revendications précédentes, dans la mesure où elles se rapportent à la revendication 2 ou 3, **caractérisé en ce que** le dispositif présente des deuxièmes moyens de transport, qui sont configurés pour réaliser un mouvement relatif dans la direction verticale entre le four (2) ouvert sur son côté supérieur et la plaque d'impression (6), lors duquel la plaque d'impression (6) est positionnée à l'intérieur du four (2).

6. Dispositif selon l'une quelconque des revendications précédentes, dans la mesure où elles se rapportent à la revendication 2 ou 3, **caractérisé en ce que** le four (2) est prévu et configuré pour recevoir également la plaque de base (5), la plaque de base (5) pouvant être insérée dans le four (2) de telle sorte qu'elle forme une paroi (21) du four (2) et ferme ainsi le four (2).

7. Dispositif selon l'une quelconque des revendications précédentes, **caractérisé en ce que** la commande (9) est configurée pour déplacer la plaque de frittage (13) verticalement vers le bas depuis la position de réception vers une position de frittage après le dépôt de la pièce imprimée (10).

8. Dispositif selon l'une quelconque des revendications précédentes, **caractérisé en ce que** la plaque de frittage (13) présente une surface polie sur laquelle est agencée la pièce imprimée (10) pour réduire le frottement par adhérence.

9. Dispositif selon l'une quelconque des revendications précédentes, **caractérisé en ce que** l'unité imprimante (1) est configurée pour imprimer la plaque d'impression (6) avec un deuxième filament (8) avant d'imprimer la pièce imprimée (10) sur la plaque d'impression (6).

10. Procédé de fabrication de pièces métalliques et/ou céramiques, qui comprend les étapes suivantes :
- l'impression par couches d'une pièce imprimée (10) avec au moins un filament (12) qui est constitué d'une poudre métallique ou céramique mélangée à un liant, une extrudeuse (11) imprimant le filament (12) sur une plaque d'impression (6),
- le transport de la plaque d'impression (6) avec la pièce imprimée (10) vers un four (2) dans une position renversée dans laquelle la pièce imprimée (10) est agencée sur le côté inférieur de la plaque d'impression (6),
- le déplacement de la plaque d'impression (6) avec la pièce imprimée (10) par rapport au four (2), la plaque d'impression (6) et la pièce imprimée (10) étant agencées dans la position renversée dans le four,
- l'étanchéification du four (2),
- le positionnement d'une plaque de frittage mobile (13) directement sous la pièce imprimée (10),
- le détachement de la pièce imprimée (10) de la plaque d'impression (6) par dissolution chimique ou thermique de la plaque d'impression (6),
- le dépôt de la pièce imprimée (10) sur la plaque de frittage (13), et
- le frittage de la pièce imprimée (10) en une pièce finie (100).

11. Procédé selon la revendication 10, **caractérisé en ce que** l'impression est effectué renversée, de telle sorte que l'extrudeuse (11) est dirigée vers le haut et imprime contre la plaque d'impression (6) agencée au-dessus, la plaque d'impression (6) étant fixée sur le côté inférieur à une plaque de base (5).

12. Procédé selon la revendication 10 ou 11, **caractérisé en ce que,** lors de l'impression de la pièce imprimée (10), une structure de support (15) est imprimée sur la pièce imprimée (10), qui, lors du dépôt de la pièce imprimée (10) sur la plaque de frittage (13), supporte la pièce imprimée (10) sur la plaque de frittage (13).

13. Procédé selon la revendication 10, 11 ou 12, **caractérisé en ce que** la plaque de frittage (13) présente sur son côté supérieur une forme qui correspond à la forme de la pièce imprimée (10).
